Europäisches Patentamt

(19) European Patent Office

Office européen des brevets

(11) Publication number: **0 088 609**
**B1**

(12) **EUROPEAN PATENT SPECIFICATION**

(45) Date of publication of patent specification: **18.05.88**

(21) Application number: **83301179.4**

(22) Date of filing: **04.03.83**

(51) Int. Cl.⁴: **A 61 B 6/00,** H 04 N 5/32,
H 05 G 1/64

(54) **Diagnostic X-ray apparatus.**

(30) Priority: **09.03.82 JP 35848/82**

(43) Date of publication of application:
**14.09.83 Bulletin 83/37**

(45) Publication of the grant of the patent:
**18.05.88 Bulletin 88/20**

(84) Designated Contracting States:
**DE FR NL**

(56) References cited:
**DE-A-2 530 315**
**US-A-3 974 386**
**US-A-4 204 225**
**US-A-4 204 226**

**TOSHIBA REVIEW, International Edition, Tokyo
Shibaura Electric Co., LTD., Japan, Jul.-Aug.
1969, no.43, M. NAKASHIKA "Latest Diagnostic
System for Circulatory Organs", pages 24-29**

(73) Proprietor: **KABUSHIKI KAISHA TOSHIBA
72, Horikawa-cho Saiwai-ku
Kawasaki-shi Kanagawa-ken 210 (JP)**

(72) Inventor: **Yasuhara, Hiroshi c/o Patent Division
Tokyo Shibaura Denki K.K. 72, Horikawa-cho
Saiwai-ku Kawasaki-shi Kanagawa-ken (JP)**
Inventor: **Fujita, Hitoshi c/o Patent Division
Tokyo Shibaura Denki K.K. 72 Horikawa-cho
Saiwai-ku Kawasaki-shi Kanagawa-ken (JP)**
Inventor: **Okazaki, Kiyoshi c/o Patent Division
Tokyo Shibuara Denki K.K. 72 Horikawa-cho
Saiwai-ku Kawasaki-shi Kanagawa-ken (JP)**

(74) Representative: **Shindler, Nigel et al
BATCHELLOR, KIRK & EYLES 2 Pear Tree Court
Farringdon Road
London EC1R 0DS (GB)**

Courier Press, Leamington Spa, England.

## Description

This invention relates to a diagnostic X-ray apparatus using digital X-ray subtraction imaging techniques including digitization of the video signals from an image intensifier—TV chain, digital subtraction, and reconversion to analogue signals for viewing on a monitor.

A digital X-ray subtraction imaging technique using an imaging intensifier—TV chain has been described in, for example, U.S. Patents Nos. 4,204,225 and 4,204,226. Those patents disclose real-time digital X-ray subtraction imaging methods and apparatus which employ the so-called Digital Radiography or Digital fluoroscopy technology. The digital X-ray subtraction imaging apparatus consists of an image intensifier, a TV camera, the output of which is converted into digital format, and an image processor incorporating two digital memories.

As disclosed in U.S. Patent No. 4,204,225, in carrying out the mask mode, a first memory system is preferably employed to integrate and store the digital mask video signals by digitization of the video signals from an image intensifier—TV chain during an initial mask time interval corresponding to a relatively large number of television fields, and a second memory system is employed to perform the functions of integrating the ongoing digital video signals and providing an output of the previously integrated video signals, from which the mask video signals from the first memory system are subtracted. The resulting digital difference video signals are supplied to a D/A converter which provides corresponding analogue difference video signals for display by the television display device; optionally, a multiformat camera can make a selected number of radiographic exposures on a single film.

In the time interval difference mode disclosed in U.S. Patent No. 4,204,226, a continuous series of difference images are produced by integrating digital video signals over a series of successive time intervals, performing a series of subtractions between each set of video signals integrated by each memory system and the preceding set to produce a series of successive digital difference video signals, and converting such digital difference video signals into visible television difference images representing changes in the X-ray image between the successive time intervals.

One advantage of a digital radiography apparatus is its ability to perform angiography by means of intravenous injection thereby supplanting intra-arterial catheter techniques considered too risky for use. Another advantage of the digital radiography apparatus is its ability to provide improved low contrast detectability, namely, by amplifying subtle amounts of contrast media in arteries better than possible using film methods. A further advantage is that the digital radiography apparatus employing a pulsed X-ray can prevent significant loss of spatial resolution due to physiological motion because the short radiation pulse for each image results in less motion unsharpness during fluoroscopy of moving objects.

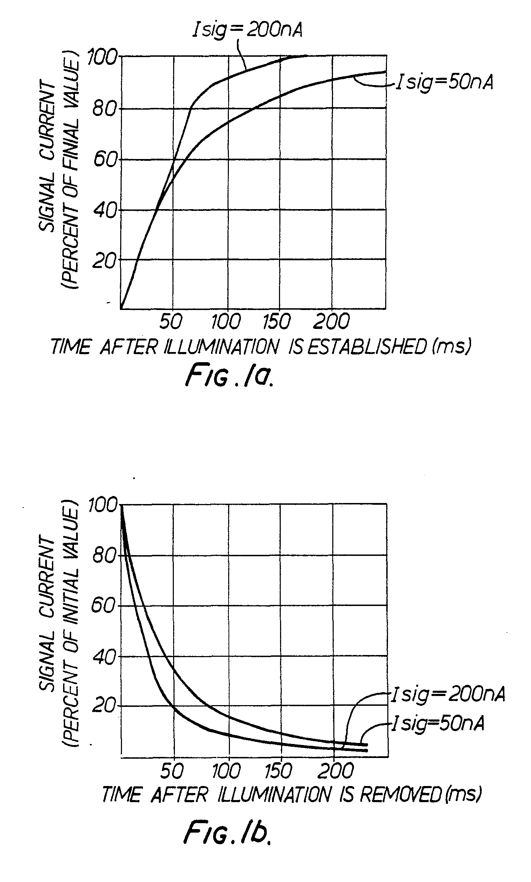

However, in the proposed digital radiography apparatus the use of subtraction of different TV frames read out in an interlaced manner by a TV camera is affected by characteristics of the TV camera. In general, the TV camera using a pick up tube, such as the vidicon, has persistance characteristics shown in Figures 1a and 1b. The curve of Figure 1a illustrates the relationship between rise time (after a step change in target illumination) and relative signal output, and the curve of Figure 1b illustrates the relationship between decay time (after a step change in target illumination) and relative signal output.

The lag between illumination change and corresponding output signal change can cause a difference in signal level between frame signals read out during one X-ray exposure and stored in one memory and frame signals read out during a subsequent X-ray exposure and stored for comparison in the other memory. For each television frame selected for storage, it is necessary to maintain consistent image signal level and image information, otherwise, the displayed image will not show only the changes that have occurred between the two frames but will also show features of no interest such as soft tissue, bone, or air filled structures that overlie and underlie the structures of interest in the subtraction operation.

An object of the present invention is to overcome or mitigate the above defects of the prior art pulsed digital radiography apparatus using an imaging intensifier—TV chain, and in particular to maintain consistent image signal level and image information for each stored television frame.

U.S. Patent No. 3,974,386 discloses a system in which a waiting interval is provided, before a video X-ray image is written to a memory tube (96) from a TV camera (46), to allow time for the X-ray tube (16) and the TV camera to stabilise, at the beginning of each X-ray exposure (Figure 6).

According to the present invention there is provided diagnostic X-ray apparatus for producing visible difference images obtained from pulsed X-ray images comprising

an X-ray generating source (10) for producing pulsed X-ray radiation;

detector means (14) for producing optical images of a subject in response to the pulsed X-ray radiation;

television means (18, 22) for converting each optical image into analogue video signals;

exposure control means (44, 46) synchronised with the vertical frame rate of the television means to initiate successive pulses of X-ray radiation from the X-ray generating source so that each pulse produces a group of video signals corresponding to image frames;

an analogue to digital converter for converting analogue video signals to digital signals;

two digital memories for storing separate digital video signals;

subtracting means for effecting a subtraction between the video signals stored in the two memories to produce difference video signals; and

a display for displaying a difference image corresponding to said difference video signals characterised in that

said control means (44, 46) are arranged to produce a first series of X-ray pulses separated in time from a second series of X-ray pulses by a waiting interval;

and in the provision of gate means (34) to block the video signals from a predetermined finite number of leading pulses in each of the first and second series of X-ray pulses and means for selecting the corresponding signal from each group of video signals and to pass the corresponding signals via the analogue to digital converter to the memories so as to ensure that the response of the television means is consistent for each video signal, said corresponding signal falling outside the rise time of the television means.

Thus the invention provides for blocking all of the video signals from a number of leading pulses in each series of pulses, and also for selecting, from each group of video signals produced by the later pulses of the series, corresponding ones of the video signals (e.g. the third one of the group in each case). This enables improved cancellation of the common areas of the pre-injection mask X-ray image and post-injection X-ray image, which may otherwise be caused by a difference in signal level between the signals read during each X-ray exposure, which may otherwise occur as a result of failure to allow exactly the same condition of stabilisation in each case.

The invention will be more readily understood by way of example from the following description of diagnostic X-ray apparatus using digital subtraction technique in accordance therewith, reference being made to the accompanying drawings, in which,

Figure 1a and 1b are graphs illustrating the persistence characteristics of a TV pick-up tube;

Figure 2 is a schematic block diagram of the diagnostic X-ray apparatus using digital X-ray subtraction imaging technique;

Figure 3 is a schematic block diagram of a data processor for association with the X-ray exposure control unit and the TV camera control unit of Figure 2;

Figure 4 is an illustration of the circuit principle for the digital X-ray subtraction imaging technique using pulsed X-ray; and

Figure 5 is a waveform diagram, which illustrates various waveforms at various parts of the controlling unit, explaining the operation of the apparatus.

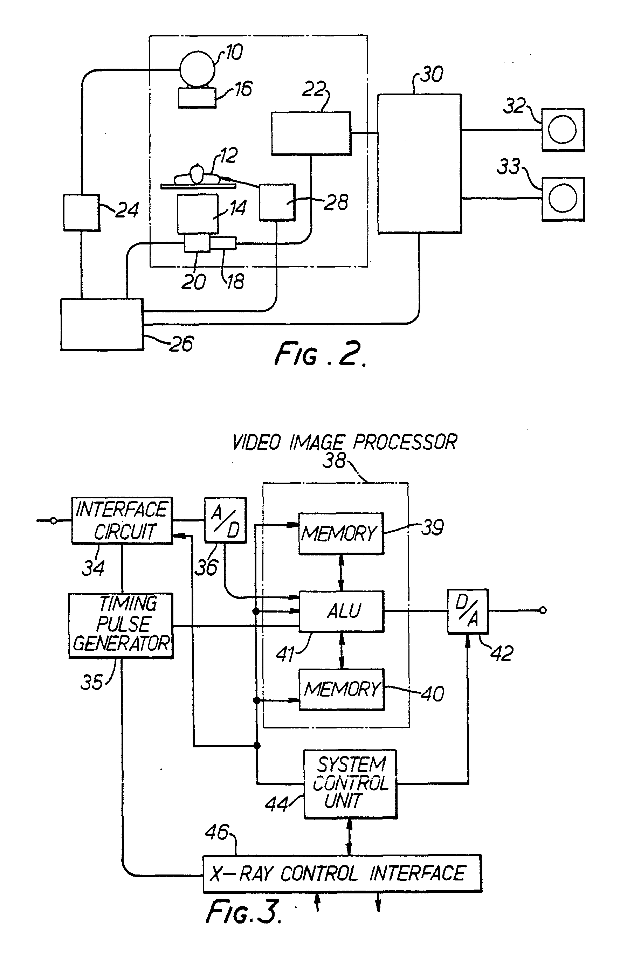

In Figure 2, an X-ray tube 10 having a conventional filament and anode produces X-rays which impinge upon a patient 12, thus casting a shadow image of the patient on an input to an image intensifier tube 14. A servo controlled collimator 16 along with its servo system (not shown) disposed at one end of the X-ray tube 10 controls the size of the X-ray beam that is emitted from the X-ray tube 10. The intensifier 14 intensifies the X-ray image and produces a corresponding optical image on the output screen of the intensifier 14. This image is scanned by a TV camera 18, via optical system 20 including an object lens, a field lens (not shown) and an auto iris (not shown) for adjusting the quantity of light from the intensifier 14, under control of a TV camera control unit 22 to produce corresponding video signals on an output of the unit 22. A high-voltage generator 24 provides high voltage to energize the X-ray tube 10 under control of an X-ray control unit 26.

The X-ray control unit 26 may energize the X-ray tube 10 to radiate pulsed X-rays either by a method using a thyristor switching system or a method using a tetrode switching system.

These methods have previously been described in Nakashima et al., *Toshiba Review International Edition*, July-Aug., No. 43, 1969, pp. 24—29.

A contrast medium is preferably injected into the right basilic vein of the patient 12 using a high-pressure injector 28 at a flow rate of 12 cc/s under control of the X-ray control unit 26. A data processor 30 for carrying out digitization of the video signals from the TV camera, digital subtraction, contour enhancement, and reconversion to analogue signals is connected to the TV camera control unit 22, which amplifies and processes the analogue video signals and from which amplified analogue video signals are delivered along an analogue video input line. The X-ray control unit 26 is also connected to the data processor 30, which provides the television synchronizing pulses for the X-ray control unit 26 to synchronize the operation of the X-ray control unit 26 with the television fields. The data processor 30 supplies the resulting analogue difference video signals for display by the television display devices 32, 33.

Attention is now directed to Figure 3 which shows details of the data processor 30 shown in Figure 2.

The data processor 30 includes an interface circuit 34 including a separator for separating field synchronizing pulses at a pulse interval of 1/60 second per field from composite video signals which are provided from the TV camera control unit 22. In addition to the separator, the interface circuit 34 includes a gate circuit. Data processor 30 further includes a timing pulse generator 35 for producing timing pulses at a pulse interval of 1/30 sec (33 msec) (corresponding to one television frame consisting of two individual fields); an analogue-to-digital converter 36 for converting analogue video signals into corresponding digital video signals; a video image processor 38 including two memory systems 39, 40 for intergrating and storing the digital video signals over a series of successive time intervals; and an arithmetic logic unit 41 for enabling the memories 39, 40 to integrate and store the digital video signals over a series of successive time intervals. The arithmetic logic unit 41 produces digital difference video signals by performing a subtraction between the two sets of integrated digital video signals stored in the memory systems 39 and 40. The signals stored in one of the memory systems are those frame signals most recently passed by the interface circuit 34 under the control of pulse generator 35 while those stored in the other memory system are those frame signals passed on an earlier occasion.

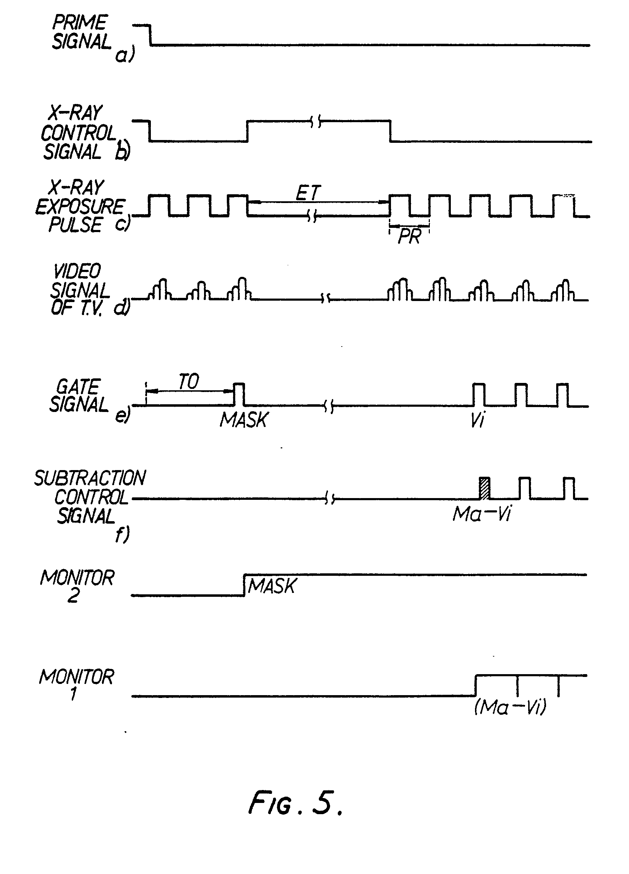

Data processor 30 further includes a digital-to-analogue converter 42 for converting the digital difference video signals into analogue difference video signals, a system control unit 44 containing a μ-cpu for providing all of the control, timing and synchronizing pulses and signals for the entire system, an X-ray control interface 46 serving as a controller for the X-ray control unit 26 from which X-ray radiation pulses (Figure 5(b)) are delivered. Interface 46 is also coupled to system control unit 44, and further receives timing pulses from timing pulse generator 35.

The μ-cpu of the system control unit 44 is programmed to perform a digital X-ray subtraction imaging operation in a predetermined sequence on receipt of a start signal (Figure 5(a)) from an operator console, setting for example the mask time interval To, the waiting interval ET to be described subsequently, and the image acquisition rate.

The operation of the apparatus according to the present invention will be now explained with reference to Figures 3, 4 and 5.

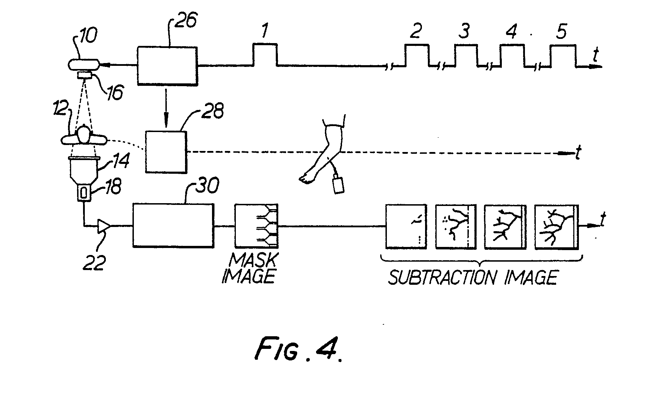

Figure 4 represents the so-called mask mode, in which a continuous series of difference images are produced by developing a preinjection mask image, prior to the injection of the contrast medium, and electronically subtracting the mask image from each of the series of post-injection images. This mask subtraction mode removes effects due to soft tissue, bone or air filled structures, so that the image elements due to the contrast medium are clearly visible in the subtracted images. An alternative method offered by the subtraction technique is the use of the Time Interval Difference method, in which each set of the integrated digital images is used as a mask for the following integrated digital images, which is particularly well-adapted for visualizing the progress of a contrast medium injected into a peripheral portion of the cardiovascular system.

In the mask mode shown in Figure 4, the X-ray control unit 26 provides the X-ray exposure pulses (Figure 5(c)) generated by unit 44 and synchronized with the television frames to the high-voltage generator 24 in response to the timing signals, from generator 35. These X-ray exposure pulses energize the high-voltage generator 24 to produce pulsed X-ray instantly on command at selected programmed time intervals PR corresponding to eight television frames. The length of each X-ray exposure pulse is shown in Figure 5(d) as corresponding to four television frames.

The high-voltage generator 24 includes a switching device turned on and off by the 100 msec pulses (Figure 5(c)) from the X-ray control unit 26. For each X-ray exposure, the TV camera 18 will produce three complete images which are transmitted to the data processor 30. The analogue video signals from the TV camera control unit 22 are gated, sampled and held on command of the system control unit 44 in the interface circuit 34.

The video signals corresponding to a sequence of television frames and, as shown in Figure 5(d), consisting of a set of four frames for each X-ray control pulse, are applied to the interface circuit 34. Initially, these signals are blocked by the gate within circuit 34, but, after a predetermined number of such frames, the gate is opened to allow the passage of the video signals of one complete frame to the analogue-to-digital converter 36; the gate signals which open the gate are shown in Figure 5(e) and, in the example there shown, the gate blocks the video signals of all the frames of the first two X-ray pulses and only allows through the signals of the third complete frame of the third X-ray pulse. The mask time interval To—the interval between the initiation of the X-ray radiation and the opening of the gate—is preselected at the operator console and is chosen to exceed the rise time of the television camera response (Figure 1a), so that the video signals consistently represent the X-ray image formed on the image intensifier tube 14.

The analogue-to-digital converter 36 applies corresponding digital video signals via the arithmetic logic unit 41 to the mask producing memory system 39 where an image serving as a mask for the subtraction is stored before injection of the contrast medium.

During a waiting interval ET equal to several television frames, e.g. 1 to 30 seconds, the X-rays are not radiated from the X-ray tube 10, and no new digital video signals are applied to the data processor 30. The time interval ET is chosen so that the X-ray contrast medium injected into the vein in the arms or legs of the patient 12 using the injector 28 becomes operative during that time interval ET. After the waiting interval, the X-ray tube 10 is again energized by the high-voltage generator 24 to produce pulsed X-rays at the programmed rate in response to the image acquisition rate initiated from the system control unit 44. As before, the gate in interface unit 34 blocks the video signals from television control unit 22 for an interval sufficient to ensure consistency in response of the television camera; that interval is shown as consisting of the first two X-ray pulses after re-energising of the X-ray tube plus the first two frames of the third X-ray pulse. Then unit 44 causes the gate to open and the second memory system 40 to store the incoming digital video signals for a complete frame.

In each successive X-ray pulse, the signals of the third frame are passed to the second memory system 40. Between successive frames passed by the gate, the signals in memory system 39 are subtracted by the arithmetic logic unit 41 from the signals stored in memory system 40.

The digital difference video signals from the output of the arithmetic logic unit 41 are supplied to the digital-to-analogue converter 42, which converts the digital difference video signals into analogue difference video signals. If desired, the digital difference video signals are supplied to an enhancement circuit (not shown), which enhances the selected level of the television scale in the input digital video signals. The analogue difference video signals are transmitted to the television monitor 32. Thus, the television monitor 32 produces a continuous series of visible difference images, representing the difference between the current X-ray image and the mask X-ray image. The television monitor 33 displays the mask image from the first memory system 39 continuously for reference. In fact it has been found to be highly advantageous to integrate the mask video signals for a large number of television frames.

Each digital memory has a storage capacity for at least one complete television field, such as a storage capacity of 512×512×13.

The X-ray pulse-width is preferably at least three complete television frames, and is illustrated as comprising four such frames.

The number of X-ray pulses generated before the video signals are allowed to pass to the memory systems and the pulse width of each pulse of X-ray radiation are chosen to minimise exposure of the patient and operating personnel to radiation.

Obvious, numerous modifications and variations of the present invention are possible in light of the above teachings. It is therefore to be understood that within the scope of the appended claims, the invention may be practiced otherwise than as specifically described herein.

## Claims

1. Diagnostic X-ray apparatus for producing visible difference images obtained from pulsed X-ray images comprising

an X-ray generating source (10) for producing pulsed X-ray radiation;

detector means (14) for producing optical images of a subject in response to the pulsed X-ray radiation;

television means (18, 22) for converting each optical image into analogue video signals;

exposure control means (44, 46) synchronised with the vertical frame rate of the television means to initiate successive pulses of X-ray radiation from the X-ray generating source so that each pulse produces a group of video signals corresponding to image frames;

an analogue to digital converter for converting analogue video signals to digital signals;

two digital memories for storing separate digital video signals;

subtracting means for effecting a subtraction between the video signals stored in the two memories to produce difference video signals; and

a display for displaying a difference image corresponding to said difference video signals characterised in that

said control means (44, 46) are arranged to produce a first series of X-ray pulses separated in time from a second series of X-ray pulses by a waiting interval;

and in the provision of gate means (34) to block the video signals from a predetermined finite number of leading pulses in each of the first and second series of X-ray pulses and means for selecting the corresponding signal from each group of video signals and to pass the corresponding signals via the analogue to digital converter to the memories so as to ensure that the response of the television means is consistent for each video signal, said corresponding signal falling outside the rise time of the television means.

2. Diagnostic X-ray apparatus according to claim 1, characterised in that each pulse has a duration of at least three television images, and the gate means (34) is effective to select for storage an image formed subsequent to the first two such images.

3. Diagnostic X-ray apparatus according to claim 2, in which the image selected for storage is that at least six images after the first such image of the sequence.

**Patentansprüche**

1. Röntgendiagnostikeinrichtung zur Erzeugung eines sichtbaren, aus gepulsten Röntgenbildern erhaltenen Differenzbildes mit

—einer Röntgenstrahlquelle (10) zur Erzeugung einer gepulsten Röntgenstrahlung,

—einer Detektoreinrichtung (14) zur Erzeugung optischer Bilder eines Objektes in Abhängigkeit von der gepulsten Röntgenstrahlung,

—einer Fernseheinrichtung (18, 22) zur Umwandlung jedes optischen Bildes in analoge Videosignale,

—einer Belichtungssteuereinrichtung (44, 46), die mit der senkrechten Bildfrequenz der Fernseheinrichtung synchronisiert ist, um aufeinanderfolgende Röntgenimpulse der Röntgenstrahlquelle zu initiieren, so daß jeder Impuls entsprechend der Bildraster eine Gruppe von Videosignalen erzeugt,

—einem Analog/Digital-Konverter zum Umwandeln aller analoger Videosignale in digitale Signale,

—zwei Digitalspeichern zum Speichern separater digitaler Videosignale,

—Subtrahiermitteln zum Subtrahieren zwischen den in zwei Speichern gespeicherten Videosignalen, um Differenzvideosignale zu erzeugen, und

—einer Wiedergabeeinrichtung zur Wiedergabe eines den Differenzvideosignalen entsprechenden Differenzbildes, dadurch gekennzeichnet, daß

—die Steuereinrichtung (44, 46) eine erste Reihe von Röntgenstrahlimpulsen erzeugt, die zeitlich von einer zweiten Reihe von Röntgenstrahlimpulsen durch ein Warteinvervall getrennt ist, und

—Gatter (34) vorgesehen sind, um die Videosignale von einer vorbestimmten endlichen Zahl führender Impulse in der ersten und zweiten Reihe von Röntgenstrahlimpulsen zu sperren, sowie

Mittel zum Auswählen des entsprechenden Signales jeder Gruppe von Videosignalen und zum Weiterleiten der entsprechenden Signale über den Analog/Digital-Konverter zu den Speichern, um sicherzustellen, daß das Ansprechen der Fernseheinrichtung für jedes Videosignal übereinstimmt, wobei das entsprechende Signal aus der Anstiegszeit der Fernseheinrichtung herausfällt.

2. Röntgendiagnostikeinrichtung nach Anspruch 1, dadurch gekennzeichnet, daß jeder Impuls die Dauer von wenigstens drei Fernsehbildern hat, und daß das Gatter (34) ein Bild Speicherung auswählt, das nach den ersten beiden solcher Bilder erzeugt wird.

3. Röntgendiagnostikeinrichtung nach Anspruch 2, dadurch gekennzeichnet, daß das für die Speicherung ausgewählte Bild dasjenige ist, das sechs Bilder nach dem ersten eines solchen Bildes in der Bildfolge auftritt.

**Revendications**

1. Dispositif de diagnostic radiologique pour produire des images différentielles visibles à partir d'images de rayons X pulsés qui comprend:

une source (10) pour produire des rayons X pulsés;

des moyens de détection (14) produisant des images optiques d'un sujet en réponse à ces rayons X pulsés;

des moyens télévisuels (18, 22) pour convertir chaque image optique en signaux vidéo analogiques;

des moyens de commande d'exposition (44, 46) synchronisés avec la cadence verticale des trames des moyens télévisuels pour initier des impulsions successives de rayons X par la source de rayons X, ce qui fait que chaque impulsion produit un groupe de signaux vidéo correspondant aux trames des images;

un convertisseur analogique/numérique pour convertir les signaux vidéo analogiques en signaux numériques;

deux mémoires numériques pour conserver des signaux vidéo numériques séparés;

des moyens arithmétiques pour effectuer une soustraction entre les signaux vidéo conservés dans les deux mémoires afin de produire des signaux vidéo différentiels ou de différences; et

un moyen pour visualiser une image différentielle correspondant à ladite différence entre lesdits signaux vidéo, caractérisé en ce que des moyens (34) sont prévus pour bloquer; les signaux vidéo pendant un nombre fini prédéterminé d'impulsions de tête appartenant respectivement à la première et à la seconde série d'impulsions de rayons X, ainsi que pour sélectionner le signal correspondant de chaque groupe de signaux vidéo et pour envoyer les signaux correspondants, via le convertisseur analogique/ numérique, vers les mémoires afin de s'assurer que la réponse des moyens télévisuels est conforme à chaque signal vidéo, ledit signal correspondant tombant en dehors du temps de montée des moyens télévisuels.

2. Appareil de diagnostic radiologique selon la revendication 1, caractérisé en ce que chaque impulsion une durée d'au moins trois images de télévision, et en ce que les moyens de blocage (34) sont conçus pour conserver l'image qui se forme après les deux premières de ces images.

3. Appareil de diagnostic radiologique selon la revendication 2, caractérisé en ce que l'image sélectionnée aux fins de mémorisation est celle située, au moins, six images après la première image de la séquence.

FIG. Ia.

FIG. Ib.

**0 088 609**

FIG . 2 .

VIDEO IMAGE PROCESSOR

FIG. 3 .

2

FIG. 4.

PRIME
SIGNAL  a)

X-RAY
CONTROL  b)
SIGNAL

X-RAY
EXPOSURE  c)
PULSE

ET

PR

VIDEO
SIGNAL  d)
OF T.V.

GATE
SIGNAL  e)

TO

MASK

Vi

SUBTRACTION
CONTROL
SIGNAL
f)

Ma-Vi

MONITOR
2

MASK

MONITOR
1

(Ma-Vi)

FIG. 5.